# EUROPEAN PATENT APPLICATION

(11) **EP 2 273 418 A1**
(43) Date of publication of application: **12.01.2011**
(21) Application number: 08873778.8
(22) Date of filing: 19.12.2008
(51) Int. Cl.: G06F 21/24, G06F 3/06

(54) **INFORMATION PROCESSING DEVICE**

(30) Priority: 31.03.2008 JP 2008089298
(71) Applicant: Eugrid, Inc., Tokyo 150-0032 (JP)
(72) Inventor: IKEDA, Minoru, Funabashi-shi Chiba 274-0063 (JP); SHIRASUKA, Koichi, Tokyo 120-0005 (JP)
(74) Representative: WSL Patentanwälte
(86) International application number: PCT/JP2008/073226
(87) International publication number: WO 2009/122623

(57) **Abstract**

It is possible to reduce the danger of information leak caused by remaining cache data. An information processing device (1) includes: data communication means (17) which performs data communication with a server computer (4) via a data communication network (5); storage means (15) which can temporality store data transmitted and received at least to/from the server computer (4); and information processing means (12) which executes information processing based on the data transmitted or received to/from the server computer. The information processing device (1) further includes: external storage device connection means (3) to which an external storage device (2) capable of data read-out and write-in is detachably connected; and shift means (12) which shifts temporary storage of data transmitted/received to/from the server computer (4) from the storage means (15) only to the external storage device (2) in accordance with mounting of the external storage device (2) on the external storage device connection means (3).

## Description

### TECHNICAL FIELD

The present invention relates to an information processing device capable of preventing leakage by loss, theft, or the like of important information acquired from a server computer and temporarily stored away.

### BACKGROUND ART

Conventionally, portable notebook computers or other computer terminals have been used to access a server computer on the Internet or another computer network, or an information management server of a business system, and a variety of information acquired from the server computer or the information management system is temporarily stored in a storage device, e.g., a hard disk or the like, capable of high-speed read/write operations in order to improve apparent communication speed by reducing the exchange of actual data on a line when a low speed line is used, to eliminate processing interruptions caused by intermittent line disconnections that occur with wireless communications, or for other purposes (e.g., see Patent Documents 1, 2).

Patent Document 1: Japanese Laid-open Patent Application No. 11-212874
Patent Document 2: 2002-1969806

### DISCLOSURE OF THE INVENTION

### [Problems To Be Solved By The Invention]

Nevertheless, there is a problem in that these systems, more particularly, the information management servers of a business system, may be accessed; and important information is viewed, processed on the basis of the important data, or processed in coordination with the information management server. In such cases, the data communicated with the information management server may be stored and saved on the hard disk or another storage device without the knowledge of the user even after the connection with the information management server has been severed. Accordingly, there is a danger that important information will be leaked when a computer terminal containing important information stored and left behind from communication with an information management server is lost or stolen.

The present invention was contrived in view of such problems, it being an object thereof to provide an information processing device that can dramatically reduce the risk of information leakage due to data being temporarily left behind (cached).

### [Means of Solving the Problems]

In order to solve the problems described above, the information processing device according to the first aspect of the present invention is provided with data communication means (communication unit 17) for carrying out data communication with a server computer (information management server 4) via a data communication network (Internet 5), storage means (storage device 15) capable of temporarily storing data exchanged with at least a server computer, and information processing means (CPU 12) for processing information on the basis of the data exchanged with the server computer, the information processing device characterized in comprising:
external storage device connection means (USB interface unit 3) to which an external storage device (USB memory 2) enabled for data reading and writing is detachably connected; and
shift means (CPU 12) for shifting temporary storage of data exchanged with the server computer, from the storage means to only the external storage device (USB memory 2) in accordance with the mounting of the external storage device to the external storage device connection means, wherein
data exchanged with the server computer is temporarily stored in only the external storage device during a connection to the external storage device connection means of the external storage device.
In accordance with this aspect, data exchanged with the server computer is stored only in a detachable external memory device, and the external memory device can be detached from the information processing device after use. Therefore, any risk of information leakage due to temporarily stored (cached) data being left behind can be dramatically reduced because the data exchanged with the server computer does not remain in the information processing device from which the external storage device has been detached.

The information processing device according to a second aspect of the present invention is the information processing device according to the first aspect, and is characterized in comprising:
read control information determination means (S2) for formatting the external storage device (USB memory 2) when read control information (MBR data) stored in a predetermined read control information storage area (MBR storage area) of the external storage device (USB memory 2) is invalid, and determining whether the read control information is valid;
genuine read control information extraction means (Sy6) for decrypting virtualized data stored in the external storage device on the condition that the read control information is invalid, and extracting genuine read control information (genuine MBR) virtualized in the virtualized data;
genuine read control information determination means (S6) for determining whether the genuine read control information extracted in the genuine read control information extraction means is valid;
genuine data generation means (S10) for making genuine data generated by decrypting the virtualized data usable in the information processing device on the condition that the genuine read control information has been determined to be valid in the genuine read control information determination means; and
virtualized data storage means (write processing) for storing invalid read control information in the read control information storage area, generating virtualized data by encrypting valid genuine read control information and genuine data that can be used in the information processing device, and storing the virtualized data in a data storage area of the external storage device that corresponds to the read control information storage area.
In accordance with this aspect, when the detached external storage device has been lost or stolen and the lost or stolen external storage device is mounted in another external storage device, formatting is carried out when the read-control information is not valid and the data stored in the external storage device cannot even be accessed in an ordinary information processing device. Therefore, leakage of information due to loss or theft can be more reliably prevented.

The information processing device according to a third aspect of the present invention is the information processing device according to the second aspect, and is characterized in comprising:
domain name acquisition means (Sk1) for acquiring a domain name assigned to the information processing device (notebook computer 1) on a computer network (LAN), wherein
said virtualized data storage means (write processing) has domain name determination means (Sy5) for generating and storing (Sk5), in the data storage area of said external storage device, virtualized data that further includes the domain name acquired by said domain name acquisition means; extracting (Sy3) the virtualized domain name together with the genuine read control information in said virtualized data on the condition that the genuine read control information has been determined to be valid in said genuine read control information determination means; and determining whether there is a match between the extracted domain name and the domain name acquired by said domain name acquisition means; and
said genuine data generation means (S10) makes said genuine data usable on the condition that said domain name determination means has determined (output to the file system of a compatible MBR) that there is a match.
In accordance with this aspect, the external storage device can be used only in a matching information processing device, e.g., an information processing device belonging to the same domain name. Therefore, leakage of information by loss or theft can be even more reliably prevented.

The information processing device according to a fourth aspect of the present invention is the information processing device according to the second or third aspect, and is characterized in comprising:
domain name acquisition means (Sk1) for acquiring a domain name assigned to the information processing device (notebook computer 1) on a computer network (LAN), wherein
said virtualized data storage means generates (Sk2) virtualized data by using the domain name acquired by said domain name acquisition means as an encryption key; and
said genuine read control information extraction means and said genuine data generation means decrypt (Sy2) the virtualized data by using the domain name acquired by said domain name acquisition means as a decryption key.
In accordance with this aspect, an external storage device can be made usable by allowing decryption of virtualized data only in an information-processing device that belongs to the same domain name. Therefore, leakage of information by loss or theft can be even more reliably prevented.

### BRIEF DESCRIPTION OF THE DRAWINGS

FIG. 1 is a perspective view showing a USB memory 2 and a notebook computer 1, which is the information processing device in the examples of the present invention;
FIG. 2 is a block view showing a configuration of the notebook computer 1 and the USB memory 2 in the examples of the present invention;
FIG. 3 is a view showing the access configuration of a program in the notebook computer 1, which is the information processing device in the examples of the present invention;
FIG. 4(a) is a view showing a conventional storage format stored in the flash memory 22 of the USB memory 2, and FIG. 4(b) is a view showing the storage format of the present invention stored in the flash memory 22 of the USB memory 2;
FIG. 5 is a flowchart showing the processing steps carried out in a notebook computer in which a virtualized kernel is not installed;
FIG. 6 is a flowchart showing the processing steps carried out in the notebook computer 1 in which the virtualized kernel of the present example has been installed;
FIG. 7 is a flowchart showing the processing steps of read processing carried out by the virtualized kernel of the present example;
FIG. 8 is a flowchart showing the processing steps of write processing carried out by the virtualized kernel of the present example; and
FIG. 9 is a flowchart showing the processing steps of the cache modification processing in the present example.

- 1: Notebook computer
- 2: USB memory
- 3: USB interface portion
- 4: Information management server
- 5: Internet
- 6: Display
- 7: Keyboard
- 8: Mouse
- 11: Data bus
- 12: CPU
- 13: RAM
- 14: Operation input unit
- 15: Storage device
- 16: Display processing unit
- 17: Communication unit
- 20: DNS server
- 21: USB controller
- 25: VPN communication device

- 30: VPN communication device

### BEST MODE FOR CARRYING OUT THE INVENTION

Examples of the present invention are described below.

### [Examples]

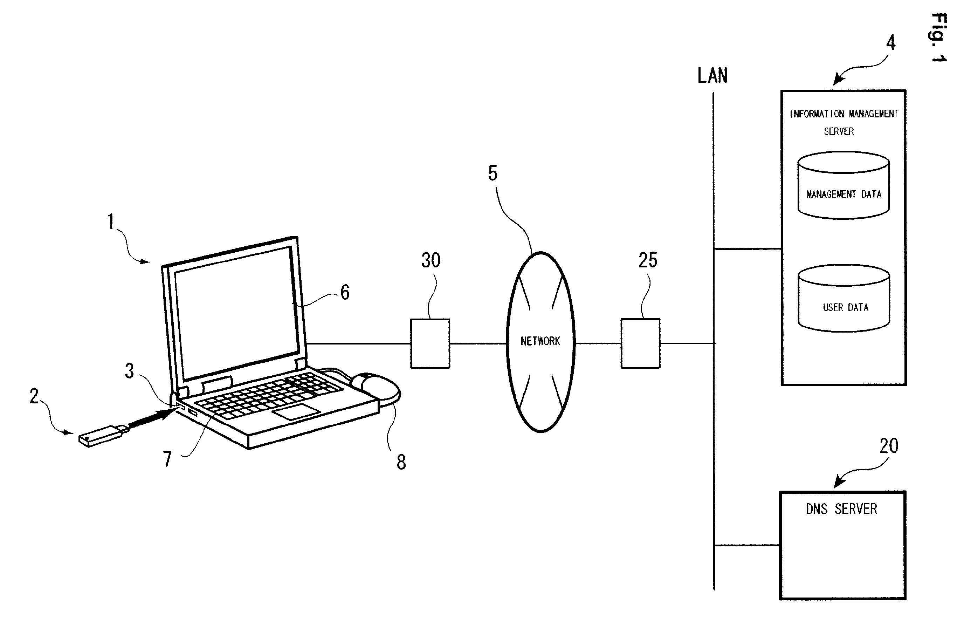

Examples of the present invention are described below with reference to the drawings. First, FIG. 1 is a system configuration view showing an information processing system using a notebook computer 1 as the information processing device in the present example.

The information processing system of the present example is mainly composed of a notebook computer 1 used as the information processing device of the present invention used by a user (employee); an information management server 4 used as the server computer of the present invention arranged in a data center of an organization (company) to which the user (employee) belongs, the information management server 4 being connected so as to be capable of communicating with the notebook computer 1 via the Internet as the data communication network; and a DNS server 20 for managing the domain name of each computer connected to the local area network (LAN), the DNS server 20 being provided to the local area network (including LAN, VPN-connected pseudo networks) to which the information management server 4 is connected.

The information management server 4 of the present example may advantageously be an ordinary server computer composed of a server control unit (not shown) having a CPU (central processing unit), RAM (random-access memory), and ROM (read-only memory); a server storage unit (not shown) for storing a variety of data; and a server communication unit (not shown) for exchanging data via a LAN (local area network) and the Internet 5. The server storage unit stores and manages management data, which is data that must not be disclosed or leaked to a third party, and user data related to the user and the notebook computer 1 employed by the user.

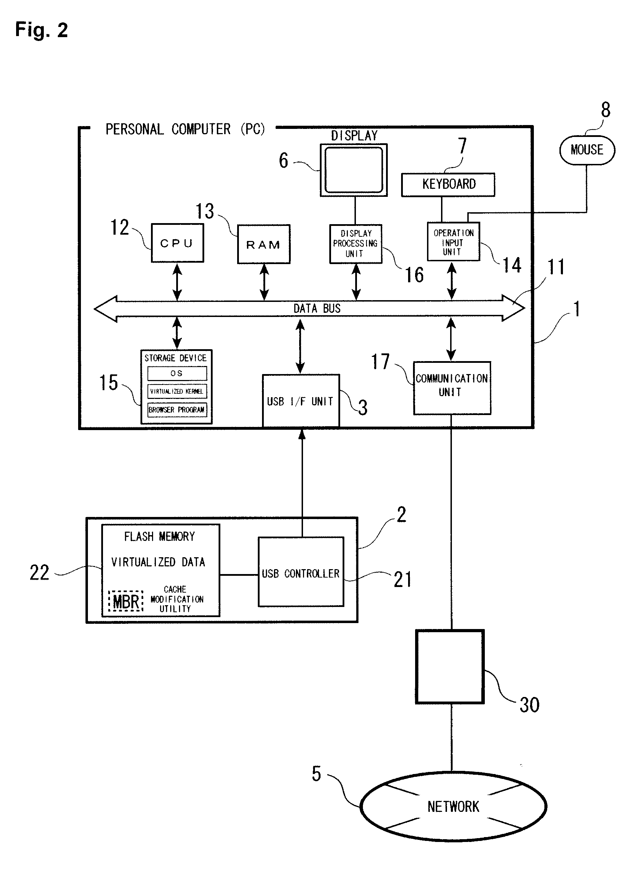

First, as shown in FIG. 2, the notebook computer 1 used in the present example is an ordinary computer having a USB (universal serial bus) interface unit 3 provided to a predetermined location on the side surface and that allows a USB (universal serial bus) memory 2 as the external storage device of the present invention to be plugged in or removed; and the following components are connected to a data bus 11 for sending and receiving data inside the computer: a CPU 12 for executing an operating system program (OS) stored in the storage device 15, various processes based on the operating system program (OS), and a virtualized kernel driver (program; to be described later), and for processing information based on data read from a USB memory 2; a RAM 13 used as work memory or the like; an operation input section 14 to which a keyboard 7 and a mouse 8 are connected; a storage device 15 composed of a hard disk drive (HDD) capable of storing data exchanged with the information management server 4; a display processor 16 connected to a display 6 and composed of a graphics board or the like for generating a display screen to be displayed on the display 6; a communication section 17 for performing data communication between the information management server 4, the DNS server 20, and other computers on a local area network (LAN) of a data center via a VPN (virtual private network) device 30 and the Internet 5; and a USB interface 3 having a connector to which the USB memory 2 is connected, and also having a communication unit for exchanging data with the USB memory 2.

As shown in FIG. 1, the USB interface 3 described above is provided to the side surface part of the notebook computer 1, and the USB memory 2 to which the USB interface 3 is connected is a quadrangular rod-shaped storage medium as viewed in cross section. A flash memory 22, which is relatively high-capacity nonvolatile memory, and a USB controller 21 locally connected to the flash memory 22 are mounted inside the USB memory, as shown in FIG. 2; and data is exchanged through the USB interface 3 of the notebook computer 1 to which the USB controller 21 is connected.

As described below, a master boot recorder (MBR), which is the read control information of the present invention, is stored in the flash memory 22, and also stored therein are a cache modification utility program automatically executed when the USB memory 2 is mounted (connected) to the USB interface unit 3, and virtualized data (including cache data) obtained by encrypting.

In the present example, a PC-AT compatible notebook computer is used as the notebook computer 1, and Windows XP (trade name registered by Microsoft in the US) can be advantageously used as the operating system program (OS). The program can recognize the USB interface 3 and the HDD storage device 15, and can initialize the USB interface 3 and the HDD storage device 15 by formatting.

The notebook computer 1 can be connected to a local area network (LAN) arranged in a data center via VPN device 30 connected to the communication unit 17.

Specifically, the local area network (LAN) also has a VPN device 25 connected to the Internet 5, as shown in FIG. 1, and the VPN device 21 (*1) and the VPN device 30 connected to the notebook computer 1 form a pseudo dedicated line via the Internet 5, whereby the notebook computer 1 can be securely connected to the local area network (LAN) from even outside the data center.

The operating system program (OS) installed in the notebook computer 1 can acquire a domain name, which is assigned by the local area network (LAN) to which the notebook computer 1 is connected, from the DNS server 20 provided to the local area network (LAN). The acquired domain name can be outputted to the virtualized kernel driver (hereinafter abbreviated as virtualized kernel). In other words, the domain name acquired by the virtualized kernel from the operating system program (OS) is the domain name acquired from the DNS server 20.

Stored together with the operating system program (OS) in the storage device 15 of the notebook computer 1 are a virtualized kernel, which is the information management program in the present invention, browser programs for exchanging various data with the information management server 4 and viewing and processing management information, and cache setting files and the like that contain settings related to temporary storage (cache) of the data exchanged with the browser programs.

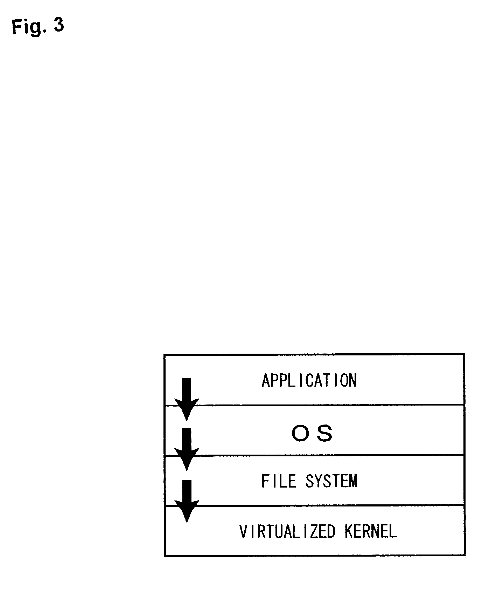

The virtualized kernel functions as a driver program in the operating system program (OS). As shown in FIG. 3, an application that operates within the operating system program (OS) accesses the operating system program (OS), whereby the operating system program (OS) is caused to access the file system in accordance with the access [performed by the application] (*2). The virtualized kernel is accessed by the file system in accordance with the access performed by the operating system program (OS), and is installed as a driver program after the operating system program (OS) has been installed.

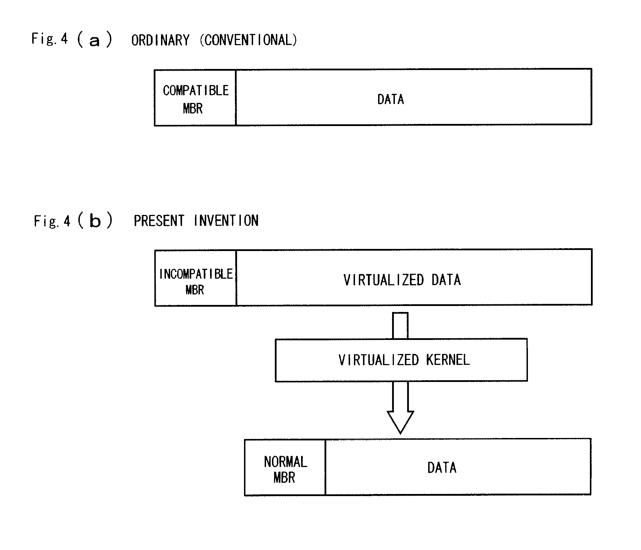

In a case in which the USB memory 2 is plugged into a conventional ordinary personal computer in which the virtualized kernel of the present example has not been installed, the storage format of the data stored in the flash memory 22 is one in which a master boot recorder (MBR) that is compatible with the operating system program (OS) is stored in a predetermined area of the header that serves as the read control information area of the flash memory 22, as shown in FIG. 4(a). The master boot recorder (MBR), which is compatible with the operating system program (OS), is stored in a predetermined storage area, and data that can be used by the operating system program (OS) is stored without modification.

In a case in which the USB memory 2 is plugged into the notebook computer 1 of the present example provided with an installed virtualized kernel, the storage format of the data stored in the flash memory 22 is one in which a master boot recorder (MBR) that is incompatible with the operating system program (OS) is stored in a predetermined area of the header that serves as the read control information area of the flash memory 22, as shown in FIG. 4(b). The master boot recorder (MBR) is invalid, and virtualized data that has been virtually formatted by encryption and cannot be directly used by the operating system program (OS) is also stored. The virtualized data is decrypted by the virtualized kernel to generate a master boot recorder (MBR) (genuine master boot recorder (MBR)) encrypted in the virtualized data and made compatible with the operating system program (OS), and also to generate data (genuine data) that can be used by the operating system program (OS).

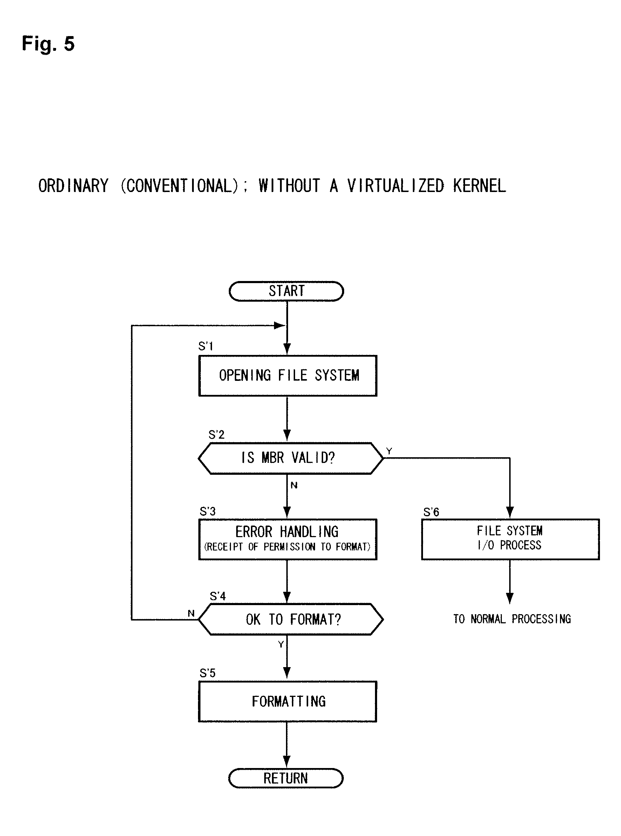

Following is a description, made with reference to the flowchart shown in FIG. 5, of the flow for a case in which an ordinary USB memory 2 is used in a notebook computer (which has the same configuration as the notebook computer 1 except that the virtualized kernel has not been installed) not provided with an installed virtualized kernel of the present example.

In a case in which an ordinary USB memory 2 is plugged into a notebook computer not provided with an installed virtualized kernel, first, an opening process (S'1) is carried out in the file system, as shown in FIG. 5, and data (MBR data) stored in a predetermined area in the header of the read control information area of the flash memory 22 is read.

It is then determined whether the data (MBR data) thus read is a valid value (S'2). If the answer is affirmative, the process advances to S'6, and the I/O process in the file system is executed, whereby the USB memory 2 is mounted as a drive and is then switched over to ordinary processing, allowing data to be written to and read from the USB memory 2.

In other words, since the data (MBR data) thus read is ordinarily a valid value, access to the data stored in the USB memory 2 is permitted when the USB memory 2 is mounted by being plugged in.

On the other hand, in a case in which the data (MBR data) thus read is determined to be invalid in step S'2, the process proceeds to step S'3 and error handling is carried out to receive permission or refusal to initialize the plugged-in USB memory 2 by formatting. In a case in which permission to format has been received in the error handling, "Yes" is determined to be the outcome in step S'4, the process proceeds to step S'5, and the plugged-in USB memory 2 is initialized by formatting.

In a case in which permission to format has not been received in the error handling, "No" is determined to be the outcome in step S'4, and the process proceeds to step S'1, whereby the error handling of S'3 is repeated to receive permission or refusal for initialization.

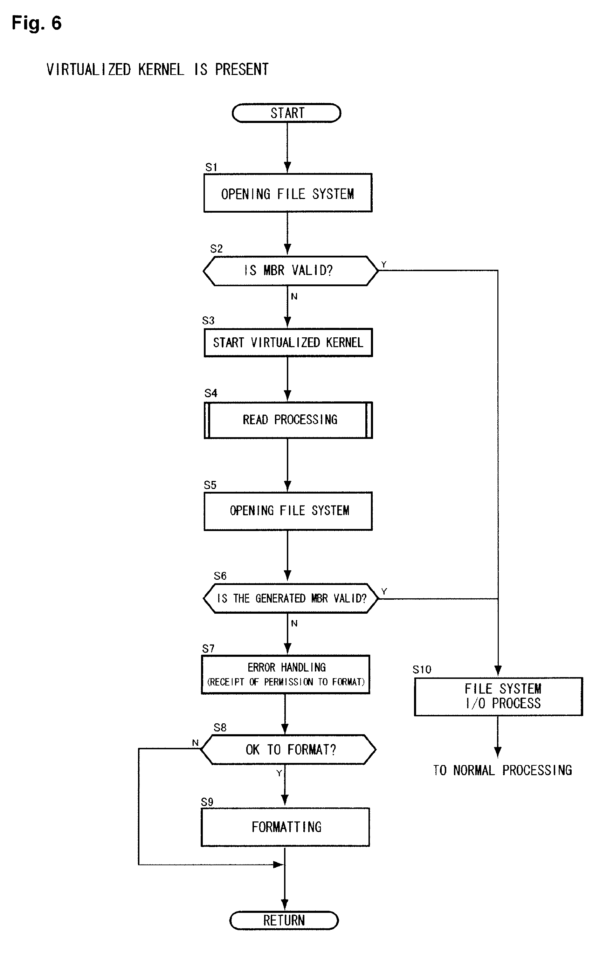

By contrast, following is a description, made with reference to the flowchart shown in FIG. 6, of the flow for a case in which the USB memory 2 has been plugged into a notebook computer 1 provided with an installed virtualized kernel of the present example. In this situation, the notebook computer 1 is already connected to a local area network (LAN) via the VPN device 30 and has already acquired a domain name assigned by the local area network (LAN) via the operating system program (OS).

In a case in which the USB memory 2 is plugged into a notebook computer 1 provided with the installed virtualized kernel of the present example, first, an opening process (S1) is carried out in the file system, as shown in FIG. 6, and data (MBR data) stored in a predetermined area in the header of the read control information area of the flash memory 22 is read.

It is determined whether the data (MBR data) thus read is a valid value (S2). If the answer is affirmative, the process advances to S10 and the I/O process in the file system is executed, whereby the USB memory 2 is mounted as a drive, a switch is made to ordinary processing, and data can be written to and read from the USB memory 2.

In other words, valid MBR data is stored in an ordinary usable USB memory 2 in an ordinary notebook computer not provided with the installed virtualized kernel. Therefore, "Yes" is determined to be the outcome in step S2, and the process advances to S10, whereby the plugged-in USB memory 2 is mounted as a drive.

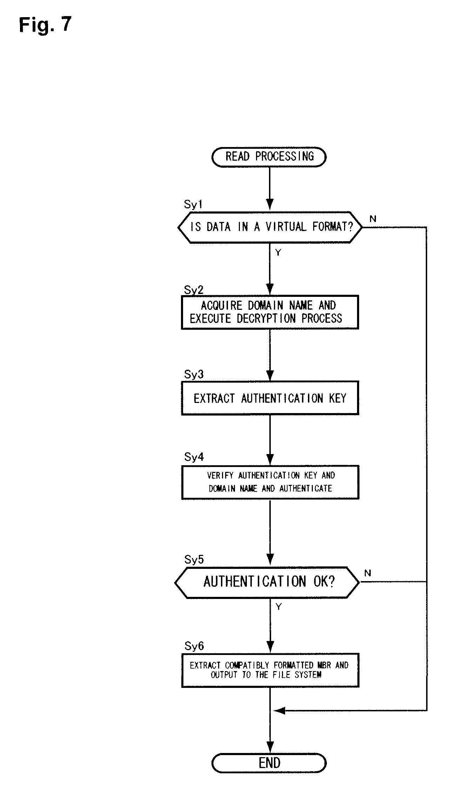

On the other hand, when the data (MBR data) thus read in step S2 is not a valid value, the process proceeds to step S3, the virtualized kernel is started, and the started virtualized kernel executes the read process (S4) shown in FIG. 7.

In the read process carried out by the virtualized kernel of the present example, first, it is determined whether the data stored in the plugged-in USB memory 2 is virtualized data having a predetermined virtual format (Sy1).

The read process is ended in a case in which the virtual format is not present. In a case in which the virtual format is present, the process proceeds to step Sy2, a domain name is acquired from the operating system program (OS), and a decryption process for decrypting the virtualized data is carried out using the acquired domain name as the decryption key.

An authentication key is extracted from the decrypted data (Sy3), the extracted authentication key and the domain name acquired in Sy2 are thereafter verified, and it is verified and authenticated whether the two domain names match each other, i.e., it is verified and authenticated in the present example whether the two domain names are the same or not (Sy4).

In the present example, the condition is that the domain names are in complete agreement with each other, i.e., are the same, but the present invention is not limited to a complete agreement, and it is also possible to determine that verification is successful as long as the domain names match each other so that predetermined parts of the domain names, e.g., the top parts or the like of the domain names, are the same.

When the authentication produces a negative result, i.e., when the two domain names are not the same, "No" is determined to be the outcome in step Sy5, and the read process is ended. On the other hand, when the authentication produces a positive result, i.e., when the two domain names are the same, the process proceeds to step Sy6, the MBR data having a compatible format is extracted from the decrypted data in step Sy2, and the extracted MBR data is outputted to the file system.

In the present example, a mode was described in which the compatibly formatted MBR data and the authentication key were decrypted together in advance, but the present invention is not limited to this option alone, and the MBR data may be decrypted separately in step Sy6.

In other words, in the read process in S4 of the present example, the data stored in the plugged-in USB memory 2 is virtualized data having a predetermined virtual format, and the decrypted MBR data is outputted to the file system on the condition that the decrypted authentication key is in agreement with the domain name assigned by the LAN to which the notebook computer 1 is connected. The MBR data is otherwise not outputted to the file system.

Following these read processes, the process proceeds to step S5, and an opening process is carried out in the file system again, whereupon it is determined whether the MBR data outputted to the file system is a valid value or not (S6).

When it has been determined that the MBR data outputted to the file system is a valid value, "Yes" is determined to be the outcome in S6, the process proceeds to step S10, and the I/O process in the file system is carried out. The USB memory 2 is thereby mounted as a drive, and data can then be read from and written to the USB memory 2 by switching to ordinary processing. In this case, data decrypted by the virtualized kernel and made compatible with the operating system program (OS) can be read by being outputted to the file system in step Sy2.

In the present example, a mode was described in which the compatible data is decrypted in advance in step Sy2 together with the authentication key and the compatibly formatted MBR data, but the present invention is not limited to this option alone, and the compatible data may be decrypted separately in step S10, which is the point at which the USB memory 2 is mounted as a drive.

When "No" is determined to be the outcome in step S6, i.e., when the MBR data has not been outputted in the read process, the process proceeds to step S7, and error handling is carried out to receive permission or refusal to initialize the plugged-in USB memory 2 by formatting. In a case in which permission to format has been received in the error handling, "Yes" is determined to be the outcome in step S8, the process proceeds to step S9, and the plugged-in USB memory 2 is initialized by formatting.

In a case in which permission to format has not been received in error handling, "No" is determined to be the outcome in step S8, and the process returns to step S1, whereby the error handling of S7 is repeated to receive permission or refusal for initialization.

In the present example, a cache modification utility program stored in the plugged-in (connected) USB memory 2 is read and automatically executed by the CPU 12 when USB memory 2 is mounted as a drive and the reading of data is allowed in step S10 as described above.

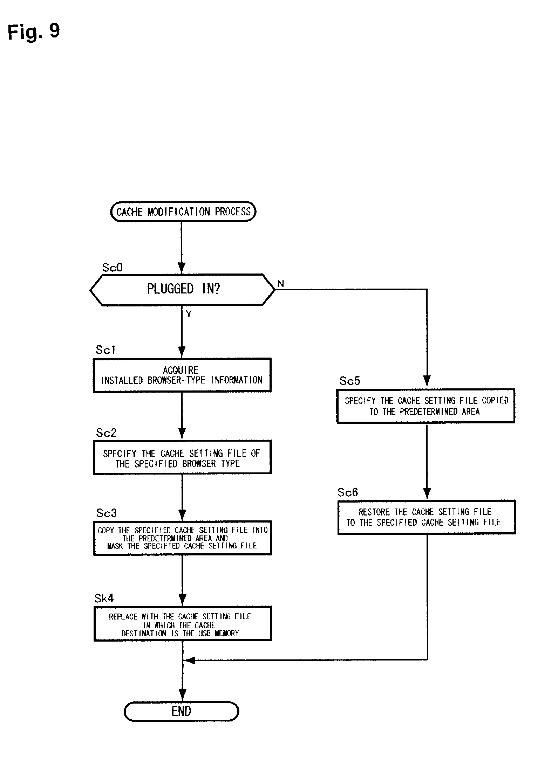

The details of the cache modification processing carried out by the cache modification utility program of the present example will be described with reference to FIG. 9. First, in the cache modification processing, it is determined whether the USB memory 2 is plugged in (connected) on the basis of whether the USB memory 2 has just been mounted.

In a case that the USB memory is plugged in (connected), the process proceeds to step Sc1, and various information about the browser program, i.e., the browser name, installed (stored) in the storage device 15 is acquired and the browser type is specified.

After the cache setting file (the unique file name is given in accordance with the browser type) of the specified browser type has been specified by searching the storage device 15 (Sc2), the specified cache setting file is copied and stored in a separate predetermined storage area, the cache setting file is masked (Sc3), the temporary storage area (cache destination) is modified to be a predetermined storage area inside the USB memory 2, the cache setting file in which other setting details are determined to be the same is written over the previous cache setting file and stored to end the process.

The data exchanged using the browser after the browser has been started up is thereby temporarily stored (cached) in a predetermined storage area inside the USB memory 2 on the basis of the setting details of the cache modification file thus overwritten and stored. Temporary storage (caching) is carried out in the same manner as the writing of ordinary storage data described below.

The cache modification utility program automatically carried out when the USB memory is mounted is executed in residence in the notebook computer 1 as a uniquely assigned task until the operation of the notebook computer 1 is ended; a predetermined operation for removing the USB memory 2 is carried out, or the removal of the USB memory 2 that is not based on a predetermined operation is monitored; and the cache modification process shown in FIG. 9 is carried out when the predetermined operation is carried out or when the USB memory 2 has been removed.

In the cache modification process of this case, the USB memory 2 is not plugged in, and "No" is determined to be the outcome in Sc0 and the process advances to step Sc5, whereby the original cache setting file copied and stored in another predetermined storage area is specified, the specified cache setting file is written and stored so as to replace the cache setting file that was overwritten and stored in step Sc4. In this manner, the mask is removed and the cache setting file is restored (Sc6). When the process is ended, the USB memory 2 is removed from the notebook computer 1 and the cache destination is automatically returned to the cache destination used before the USB memory 2 was plugged in.

In other words, the temporary storage of the data exchanged with the information management server 4 (server computer) is shifted by the cache modification processing carried out by the cache modification utility program of the present example, from the storage device 15 (storage means) to only the USB memory 2 (external storage device) when the USB memory 2 (external storage device) is plugged into (connected) to the USB interface unit 3 (external storage device connection means). The CPU 12 for carrying out the cache modification processing constitutes the shift means in the present invention.

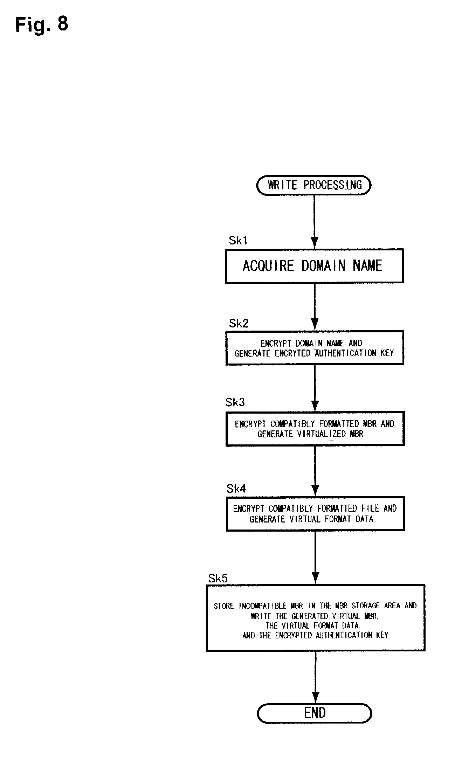

Next, the details of the writing process executed by the virtualized kernel in the notebook computer 1 of the present example will be described with reference to FIG. 8 for a case in which data is written to the plugged-in USB memory 2. First, the virtualized kernel acquires (Sk1) a domain name from the operating system program (OS) and generates (Sk2) an encrypted authentication key by encrypting the acquired domain name using the domain name as the encryption key.

A virtual MBR is generated (Sk3) by encrypting the compatibly formatted MBR, i.e., the MBR data outputted to the file system in step Sy6, using the encryption key of the domain name acquired in step Sk1.

Compatibly formatted file data to be written is encrypted using the encryption key of the domain name acquired in step Sk1, and virtualized data having a virtual format is generated.

The process then proceeds to step Sk5, and incompatible MBR data having an invalid value is stored in a predetermined area (MBR storage area) in the header of the read control information area in the flash memory 22 of the USB memory 2. The encrypted authentication key, virtual MBR, and virtualized data generated in steps Sk2, Sk3, and Sk4 are stored in the storage area that corresponds to the incompatible MBR data, and the process is ended.

Situations may thus occur in which a USB memory 2 written over by the writing process of a virtualized kernel is lost or stolen, and the lost or stolen USB memory is plugged into an ordinary personal computer in which the virtualized kernel has not been installed. In such a situation, "No" is determined to be the outcome in S'2, as shown in the flowchart of FIG. 5, and the USB memory 2 is initialized by formatting without being mounted because incompatible MBR data is stored in the MBR storage area of the flash memory 22, as described above.

In contrast, when the USB memory 2 is again plugged into a notebook computer 1 in which data has been written, "Yes" is determined to be the outcome in S6, and the process proceeds to step S10 in the procedure shown in FIG. 6. Therefore, the USB memory 2 can be mounted and the various data stored in the USB memory 2 can be read and used in the notebook computer 1.

In the case of a personal computer other than a notebook computer 1 in which data has been written, there may be situations in which the virtualized kernel is installed similarly to the notebook computer 1, and the personal computer is connected to the same LAN as the notebook computer 1. In such situations, "Yes" is determined to be the outcome in S6, and the process proceeds to step S10 in the procedure shown in FIG. 6 in the same manner as in the case of the notebook computer 1 in which data has been written. Therefore, the USB memory 2 can be mounted and the various data stored in the USB memory 2 can be read and used in the notebook computer 1.

On the other hand, "No" is determined to be the outcome in step Sy5 of the read process shown in FIG. 7 in the case of a personal computer connected to a LAN having a different domain name from the notebook computer 1. This occurs even in the case of a personal computer provided with an installed virtualized kernel in the same manner as in the case of the notebook computer 1. The USB memory 2 can thereby be initialized by formatting without being mounted.

In accordance with the present example, data exchanged with the information management server 4 (server computer) is stored only in the detachable USB memory 2 (external storage device) when the USB memory 2 is plugged in, and since the USB memory 2 can be removed from the notebook computer 1 (information processing device) after usage, it is possible to dramatically reduce the danger of information leakage due to temporarily stored (cached) data being left behind, because data exchanged with the information management server 4 (server computer) does not remain in the notebook computer 1 (information processing device) from which the USB memory 2 (external storage device) has been removed.

In accordance with the present example, when a lost or stolen external-storage USB memory 2 is plugged into an ordinary notebook computer as an information-processing device in which the virtualized kernel has not been installed, the MBR data as the read control information is not valid for the ordinary notebook computer, whereby the plugged-in external-storage USB memory 2 is formatted. Therefore, leakage of information by loss or theft can be more reliably prevented because access to the data temporarily stored (cached) in the USB memory 2 (external storage device) is made impossible.

In accordance with the present example, the USB memory 2 (external storage device) can be used only in a matching notebook computer 1, i.e., a computer that belongs to the same domain name, and leakage of information by loss or theft can therefore be even more reliably prevented. Also, since the USB memory 2 (external storage device) can be used in a plurality of notebook computers 1 that belong to the same domain name and are provided with an installed virtualized kernel, the notebook computers 1 or other information-processing devices can be used more effectively in a company or the like.

In accordance with the present example, an acquired domain name is used as the encryption key, and decryption is thereby made impossible in an information-processing device that belongs to a different domain name. Therefore, leakage of information by loss or theft can be even more reliably prevented because a USB memory 2 (external storage device) can be used by the decryption of virtualized data only in an information-processing device that belongs to the same domain name.

Examples of the present invention were described above with reference to the diagrams, but the specific configuration is not limited to the examples; the present invention including additions and modifications in a range that does not depart from the spirit of the present invention.

In the examples, a USB memory 2 is used as an example of an external storage device, but the present invention is not limited to this option alone, and card-type external storage devices with nonvolatile memory may be used as the external storage devices. It is also possible to use a small hard disk device provided with a USB interface, or an external device that can rewritably store data in a non-volatile manner and can be attached to and detached from the information-processing device.

In the examples, a domain name is used as an authentication key and an encryption key, but the present invention is not limited to this option alone, and other types of information, e.g., a domain ID that allows the domain to be specified, or a PIN or the like received from the user may be used as the authentication key and/or the encryption key.

In the examples, VPN devices 25, 30 are used in order to securely connect the notebook computer 1 (information processing device) to a local area network (LAN), and the notebook computer 1 (information processing device) is VPN connected to the local area network (LAN), but the present invention is not limited to this option alone; the notebook computer 1 (information processing device) may be connected to the information management server 4 via the Internet 5 without the use of the VPN devices 25, 30.

In the examples, the notebook computer 1 (information processing device) and the information management server 4 (server computer) are connected via the Internet 5, but the present invention is not limited to this option alone; the notebook computer 1 may be directly connected to a local area network (LAN) without the use of the Internet 5. In this case, the local area network (LAN) corresponds to the data communication network in the present invention.

In the examples, the domain name is used as an authentication key and an encryption key in order to allow a plurality of users to share the notebook computer 1 (information processing device) connected to a local area network (LAN) as a company network, but the present invention is not limited to this option alone; each user may use only a notebook computer 1 (information processing device) individually assigned to the user, and a machine ID, MAC address, or other information unique to the information processing terminal may be used as the authentication key and the encryption key.

## Claims

1. An information processing device provided with data communication means for carrying out data communication with a server computer via a data communication network, storage means capable of temporarily storing data exchanged with at least a server computer, and information processing means for processing information on the basis of the data exchanged with the server computer, the information processing device **characterized in** comprising:
external storage device connection means to which an external storage device enabled for data reading and writing is detachably connected; and
shift means for shifting temporary storage of data exchanged with said server computer, from said storage means to only said external storage device in accordance with the mounting of said external storage device to said external storage device connection means, wherein
data exchanged with said server computer is temporarily stored in only said external storage device during a connection to said external storage device connection means of said external storage device.

2. The information processing device according to claim 1, **characterized in** comprising:
read control information determination means for formatting said external storage device when read control information stored in a predetermined read control information storage area of said external storage device is invalid, and determining whether said read control information is valid;
genuine read control information extraction means for decrypting virtualized data stored in said external storage device on the condition that said read control information is invalid, and extracting genuine read control information virtualized in the virtualized data;
genuine read control information determination means for determining whether the genuine read control information extracted in said genuine read control information extraction means is valid;
genuine data generation means for making genuine data generated by decrypting said virtualized data usable in the information processing device on the condition that the genuine read control information has been determined to be valid in the genuine read control information determination means; and
virtualized data storage means for storing invalid read control information in said read control information storage area, generating virtualized data by encrypting valid genuine read control information and genuine data that can be used in the information processing device, and storing the virtualized data in a data storage area of said external storage device that corresponds to said read control information storage area.

3. The information processing device according to claim 2, **characterized in** comprising:
domain name acquisition means for acquiring a domain name assigned to the information processing device on a computer network, wherein
said virtualized data storage means has domain name determination means for generating and storing, in the data storage area of said external storage device, virtualized data that further includes the domain name acquired by said domain name acquisition means; extracting the virtualized domain name together with the genuine read control information in said virtualized data on the condition that the genuine read control information has been determined to be valid in said genuine read control information determination means; and determining whether there is a match between the extracted domain name and the domain name acquired by said domain name acquisition means; and
said genuine data generation means makes said genuine data usable on the condition that said domain name determination means has determined that there is a match.

4. The information processing device according to claim 2 or 3, **characterized in** comprising:
domain name acquisition means for acquiring a domain name assigned to the information processing device on a computer network, wherein
said virtualized data storage means generates virtualized data by using the domain name acquired by said domain name acquisition means as an encryption key; and
said genuine read control information extraction means and said genuine data generation means decrypt the virtualized data by using the domain name acquired by said domain name acquisition means as a decryption key.
